# FASCICULE DE BREVET EUROPEEN

(11) **EP 2 844 510 B1**
(45) Date de publication et mention de la délivrance du brevet: **22.02.2017**
(21) Numéro de dépôt: 13723865.5
(22) Date de dépôt: 24.04.2013
(51) Int. Cl.: B60K 15/06, B60P 3/24, B60K 15/063, B60S 1/50, B60K 15/03

(54) **VÉHICULE AVEC RÉSERVOIR DOUBLE COMPARTIMENT**
Fahrzeug mit ZWEIGETEILTEm TANK
VEHICLE WITH DUAL COMPARTMENT TANK

(30) Priorité: 30.04.2012 FR 1253969
(43) Date de publication de la demande: 11.03.2015
(73) Titulaire: Renault S.A.S., 92100 Boulogne-Billancourt (FR)
(72) Inventeur: KENICKE, João Henrique de Paiva, Curitiba (BR); KLOSTERMANN, Ronal, Curitiba (BR); THOMAZ, Gustavo, Curitiba (BR); NUNES, Alexandre, Curitiba (BR); SILVA, Julio, Curitiba (BR)
(86) Numéro de dépôt international: PCT/FR2013/050912
(87) Numéro de publication internationale: WO 2013/164531

(56) Documents cités:
- EP-A1- 0 771 704
- DE-A1- 3 704 325
- DE-A1- 19 909 041
- US-A1- 2002 185 180

## Description

L'invention concerne un véhicule avec un réservoir à au moins deux compartiments étanches.

L'une des améliorations recherchée dans les véhicules automobiles réside dans l'agencement de ses différents éléments ou composants, afin d'éviter un encombrement excessif des différents compartiments du véhicule, notamment du compartiment moteur.

En effet, du fait des améliorations des différents éléments, tels que les dispositifs de climatisation, les réservoirs lave-glaces, les dispositifs « turbo », ainsi que leurs ajouts dans le compartiment moteur, il est nécessaire d'adapter leur structure et forme à la configuration les environnant.

En outre, afin de garantir une sécurité maximale de l'habitacle du véhicule en cas de choc frontal ou latéral et de respecter les législations locales en matière de sécurité, il est prévu des espaces libres susceptibles de contribuer à amortir ces chocs.

Les espaces libres considérés sont prévus pour éviter notamment l'écrasement du réservoir essence en cas de choc, susceptible d'engendrer des fuites indésirables. Par exemple, il existe des espaces vides entre deux colonnes de suspension qui peuvent empêcher la déformation de la partie extérieure de la carrosserie en cas de choc frontal ou latéral. Ces espaces vides peuvent également être prévus pour limiter les conséquences fâcheuses au piéton en cas de choc.

Par conséquent, la présence de ces espaces libres nécessite une adaptation des éléments constitutifs notamment du compartiment moteur, tant sur le plan fonctionnel que sur le plan conformationnel.

Le développement technologique de nouveaux moteurs, tels que les moteurs hybrides (essence/électricité) ou des moteurs fonctionnant avec d'autres carburants issus notamment de sources végétales, tels que l'éthanol ou autres, constitue une source supplémentaire d'encombrement du compartiment moteur par la présence d'éléments nécessaires à leur fonctionnement

En particulier, pour les véhicules fonctionnant avec des carburants issus de végétaux, tels que l'éthanol, en mélange avec de l'essence classique, il est prévu, outre le réservoir éthanol, un réservoir additionnel d'essence conventionnelle nécessaire au démarrage à froid de tels moteurs.

La présence du réservoir additionnel d'essence, certes nécessaire, présente toutefois l'inconvénient d'une perte d'espace libre dans le compartiment moteur, et il existe un besoin d'améliorer l'agencement des différents organes dudit compartiment moteur.

Ces inconvénients sont accrus par le positionnement d'un réservoir lave-glaces, lequel est habituellement disposé dans le compartiment moteur.

Avec la réduction de la taille et l'augmentation du nombre de pièces du compartiment moteur, il est encore toutefois nécessaire de trouver des solutions pour réduire le volume total des composants, afin d'assurer notamment la présence d'espaces vides garantissant une sécurité en cas de chocs.

Le document US 6,026,974 décrit une adaptation du réservoir essence comprenant un réservoir essence et un réservoir pour fluide, notamment un réservoir lave-glaces, et des moyens de fixation pour la juxtaposition des deux réservoirs. Le réservoir essence présente un espace vide apte à recevoir le réservoir pour fluide et des encoches ayant la forme de canaux afin que le réservoir pour fluide puisse être positionné par glissement, et ledit réservoir étant entouré par trois faces du réservoir essence. Un tel agencement est toutefois relativement complexe et coûteux à réaliser.

Un véhicule comprenant les caractéristiques du préambule de la revendication 1 est connu du document EP 0 771 704 A1.

L'invention vise à pallier au moins l'un des inconvénients cités plus haut en proposant un réservoir de voiture automobile comprenant une enveloppe extérieure délimitant un volume intérieur, l'enveloppe comprenant deux parties, une partie de fond et une partie de couvercle, solidarisées entre elles de manière étanche, caractérisé en ce que ladite enveloppe comporte une cloison interne, réalisée d'une pièce avec l'enveloppe, ladite cloison séparant le volume intérieur en deux compartiments étanches, laquelle cloison interne de séparation s'étend depuis la partie de fond et la partie couvercle.

Ainsi, la réalisation d'un réservoir à deux compartiments étanches grâce à la cloison interne de séparation présente plusieurs avantages et fournit plusieurs effets.

Le premier avantage réside dans une réduction du volume occupé par un tel réservoir, notamment dans le compartiment moteur, puisque chaque compartiment du réservoir peut avantageusement contenir des fluides de nature différente, ce qui évite la présence de deux réservoirs individuels, indépendants, chacun destiné à un usage différent. Un des deux compartiments peut être conformé pour contenir de l'essence conventionnelle requise pour un démarrage de moteur fonctionnant avec un carburant issu de sources végétales, tels que l'éthanol ou autres, en mélange avec de l'essence classique, et l'autre des compartiments étant prévu pour contenir un fluide autre, tel que pour lave-glaces.

L'étanchéité des deux compartiments par l'intermédiaire de la cloison interne de séparation doit être garantie pour éviter le mélange indésirable de fluides, notamment lorsqu'ils sont de nature chimique différente, ce qui, dans le cas contraire, peut altérer de façon rédhibitoire la fonctionnalité de chaque compartiment et endommager gravement le bon fonctionnement du véhicule.

La réduction du volume du réservoir permet avantageusement de conserver les espaces vides, en particulier dans le compartiment moteur, ce qui peut assurer une diminution des dégâts provoqués par des chocs, comme indiqué plus haut.

D'autres avantages résident dans la réduction des coûts de fabrication et/ou des gains de temps de montage d'un tel réservoir. Il peut ainsi être prévu une seule ligne de fabrication du réservoir et/ou une seule ligne de montage dans le véhicule.

Selon des modes avantageux de réalisation, les parties de fond et couvercle de l'enveloppe présentent des bords d'étanchéité complémentaires configurés pour être solidarisés entre eux de façon étanche permettant de délimiter le volume intérieur de l'enveloppe.

L'enveloppe extérieure du réservoir selon l'invention n'est pas limitée en dimension ni en géométrie, à la condition que les effets et avantages de l'invention soient respectés.

La taille et la configuration de l'enveloppe extérieure constitutive du réservoir sont avantageusement prévues et configurées selon le milieu l'environnant, par exemple en fonction du type de carrosserie du véhicule automobile et selon la forme et taille des autres organes présents, et, d'une manière plus générale, afin d'optimiser et de s'adapter à l'espace environnant.

L'enveloppe peut être de toute forme géométrique, laquelle forme délimite le volume intérieur de l'enveloppe par une pluralité de faces extérieures, avantageusement au nombre de six, deux faces inférieure et supérieure et quatre autres faces formant de préférence une structure sensiblement rectangulaire ou parallélépipédique, dont les extrémités peuvent être arrondies. Deux faces, dites faces latérales, parallèles entre elles ou non, peuvent constituer respectivement des faces de fixation du réservoir à des éléments de carrosserie du véhicule ou à des parties du compartiment moteur par l'intermédiaire de pattes de fixation. Deux autres faces, dites faces longitudinales, parallèles entre elles ou non, peuvent présenter des longueurs respectives égales ou supérieures aux longueurs respectives des faces latérales et sont avantageusement configurées pour recevoir des composants du réservoir, telles que des pompes d'évacuation des fluides contenus dans chaque compartiment du réservoir, des moyens d'évacuation des fluides, des raccords, des joints d'étanchéité et des capteurs de niveau des fluides.

Les faces longitudinales et/ou latérales du réservoir peuvent présenter des formes variables, aussi bien planes que non planes.

Selon un mode de réalisation, les parties de fond et couvercle peuvent être constituées d'une face supérieure et inférieure respectivement et les faces latérales et longitudinales étant distinctes.

Ces faces latérales, longitudinales et les parties de fond et couvercle peuvent alors être alors délimitées par des bords d'étanchéité complémentaires qui permettent la solidarisation et la fixation ultérieure desdites faces et parties par les bords d'étanchéité respectifs, afin de former l'enveloppe, par exemple par soudage ou collage. Les bords d'étanchéité s'étendent ainsi sur toute la périphérie de l'enveloppe.

Cependant, ce mode de réalisation n'est pas préféré, car il requiert la solidarisation d'une pluralité de parties et des faces entre-elles.

Dans un autre mode de réalisation, les parties de fond et couvercle peuvent former avantageusement deux demi-enveloppes, chaque demi-enveloppe pouvant comporter deux demi-faces latérales et longitudinales qui sont ensuite solidarisées entre-elles par exemple par soudage ou collage, pour la réalisation de l'enveloppe. Cette configuration permet la fabrication aisée de l'enveloppe, par exemple par extrusion d'un matériau polymère.

Les parties de fond et couvercle peuvent être solidaires l'une de l'autre de façon sensiblement parallèles selon une direction horizontale, ou pas.

La cloison interne de séparation du volume intérieur en deux compartiments étanches s'étend depuis la partie de fond et la partie couvercle, de sorte que la cloison interne de séparation peut être fixée soit à la partie de fond, soit à la partie couvercle, préalablement à la solidarisation desdites parties de fond et couvercle entre-elles. La fixation peut être réalisée par des techniques classiques, telles que collage ou soudage.

La cloison interne peut également être réalisée en deux parties, l'une fixée à la partie de fond et l'autre fixée à la partie de couvercle, ces deux parties étant conformées pour être en contact étanche lorsque les parties de fond de couvercle sont solidarisées.

En particulier, ces deux parties de la cloison interne peuvent être solidarisées entre elles, par exemple par collage ou soudage, lors de la solidarisation des parties de fond et de couvercle.

Avantageusement, la cloison interne, lorsqu'elle est en une partie est réalisée d'une pièce avec l'une des parties de fond ou de couvercle, et lorsqu'elle est réalisée en deux parties, chacune des parties est solidarisée avec l'une des parties de fond et de couvercle.

La cloison interne de séparation est avantageusement configurée pour séparer le réservoir en deux compartiments selon un axe sensiblement parallèle aux faces latérales.

Chaque compartiment peut présenter un volume identique ou bien différent.

La cloison interne de séparation de l'enveloppe est avantageusement formée d'au moins deux parois sensiblement parallèles.

Un tel agencement garantit une étanchéité accrue entre les deux compartiments.

Avantageusement, deux parois sensiblement parallèles forment la cloison interne de séparation.

Chaque paroi de la cloison interne de séparation est alors une paroi délimitant de manière étanche le volume intérieur respectif de chaque compartiment.

Selon un mode de réalisation, lesdites parois sont solidaires l'une de l'autre, en contact par leurs faces respectives, lesquelles faces peuvent présenter des formes complémentaires planes ou ondulées, en fonction de la géométrie de l'enveloppe.

Selon des formes avantageuses de réalisation de l'invention, les deux parois sont séparées l'une de l'autre d'une distance prédéterminée, définissant un espace inter-paroi, l'enveloppe comprenant au moins un orifice traversant débouchant dans l'espace inter-paroi.

L'espace inter-paroi définit, selon cet agencement, un espace vide de sorte qu'il peut être prévu un orifice situé de préférence sur la partie supérieure ou inférieure de l'enveloppe, lequel orifice traverse l'épaisseur de l'enveloppe au niveau de l'espace inter-paroi.

La présence d'un tel l'orifice agencé pour communiquer entre l'espace séparant ces doubles parois et le milieu extérieur permet l'évacuation d'un fluide qui se serait épanché d'au moins un des compartiments vers l'espace inter-paroi en utilisation, et permet de faciliter les tests d'étanchéité des deux compartiments à la fabrication. Ceci optimise encore davantage la fonctionnalité des deux compartiments et garantit à l'utilisateur le bon fonctionnement du réservoir. L'orifice s'étend de préférence sur au moins une partie de la périphérie de la cloison de séparation.

L'orifice est avantageusement une fente s'étendant sur au moins une partie de l'enveloppe et débouchant sur l'espace inter-paroi pour conjointement permettre l'évacuation éventuelle d'un fluide s'étant répandu dans l'espace inter-paroi, éviter une pollution indésirable de l'espace inter-paroi par des poussières ou fluides provenant du milieu extérieur et permettre une entrée d'air destinée à assécher ledit espace.

La fente s'étend de préférence sur une partie juste nécessaire de l'enveloppe pour obtenir les effets voulus, et elle peut représenter une dimension (longueur) comprise entre 1/50 et 1/10 de celle de la cloison de séparation.

Typiquement, ladite fente, qui peut être de forme circulaire, rectangulaire, carrée, ovaloïde ou autre, présente une dimension (longueur et/ou largeur) de quelques millimètres, par exemple de 2 à 5 mm. La fente peut être pourvue à sa surface d'un tamis à mailles de dimensions variable pour éviter de façon accrue une pollution de l'espace inter-paroi par des poussières venant du milieu extérieur.

De préférence, l'espace inter-paroi est typiquement compris dans la gamme de valeurs situées entre 1 et 5 mm.

Selon des formes avantageuses de réalisation, l'enveloppe extérieure présente une épaisseur délimitant la partie intérieure de ladite enveloppe. Cette épaisseur est classique pour ce type de réservoir, et celle-ci peut être de quelques millimètres.

Le réservoir est avantageusement réalisé en un matériau polymère compatible avec chaque fluide destiné à être contenu dans chaque compartiment respectif.

Un tel matériau limite les coûts de production et permet un positionnement aisé du réservoir en particulier dans le compartiment moteur lié à la souplesse du matériau qui y est associée.

La nature chimique du matériau polymère n'est pas limitée, à la condition qu'il puisse être adapté aux fluides susceptibles d'être contenus dans chaque compartiment. Il est avantageux que le réservoir soit réalisé en un matériau polymère unique, commun aux compartiments et à la cloison de séparation, afin de limiter les coûts de production.

On peut citer les polymères ou co-polymères à base de polyéthylène ou autres, tels que le polyéthylène haute densité (PEHD).

Le réservoir peut être fabriqué par toute technique connue de l'homme du métier, le moulage par injection étant préféré en termes de facilité de mise en oeuvre et de coûts.

Lorsque le réservoir est prévu pour être en matériau polymère, on effectue alors une solidarisation, le cas échéant, des différentes parties et faces et/ou de la cloison interne de séparation par soudage de façon à garantir leur étanchéité.

Le réservoir comprend de façon classique les éléments ou composants standards qui y sont associés permettant son utilisation fonctionnelle.

Parmi ces composants, on peut citer les pompes d'évacuation de fluides, telles que pompes pour eau ou pompe pour essence, des moyens de fixation et de maintien des pompes au réservoir ou enveloppe, des orifices de remplissage de chaque compartiment, des bouchons de fermeture des orifices de remplissage, des moyens de transfert de fluides pour un usage indiqué, tels que les tuyaux, des joints d'étanchéité pour différents composants, des joints anti-vibration, des joints anti-bruits et autres.

Avantageusement, sur une des faces longitudinales, chaque compartiment définit sur une de ses longueurs, délimitée par une extrémité de la cloison interne de séparation, des creux ou dépressions formant des logements de pompes pour fluides, afin d'optimiser les espaces vides, notamment dans le compartiment moteur.

Les logements de pompes pour fluides sont configurés pour présenter classiquement des formes complémentaires aux parois externes desdites pompes, et ces logements ne sont pas limités en forme. Généralement, les logements présentent une surface courbe épousant par exemple la forme d'un cylindre, car les pompes à fluide peuvent présenter habituellement une forme sensiblement cylindrique.

L'enveloppe peut en outre comprendre des moyens de fixation et de maintien des pompes pour fluides, de préférence disposés de part et d'autre des logements des pompes, et destinés à coopérer avec des moyens de fixation et de maintien complémentaires pourvus sur chaque pompe pour fluide. Ces moyens de fixation et de maintien des pompes peuvent être des moyens d'encliquetage. Par exemple, il peut s'agir de pattes faisant saillie des pompes, définissant des orifices traversants, agencés pour coopérer avec des doigts faisant saillie de l'enveloppe.

Chaque pompe peut alors être fixée et maintenue contre le logement par exemple par simple encliquetage.

Avantageusement, chaque pompe peut être munie d'un joint anti-bruit, afin d'atténuer les nuisances sonores du réservoir lors du fonctionnement du véhicule. Le joint anti-bruit est habituellement en mousse polymère appropriée.

Il peut également être prévu des joints anti-vibration disposés sur chaque pompe et/ou sur les pattes de fixation du réservoir au véhicule, lesquelles sont situées de préférence sur les faces latérales du réservoir, ce qui améliore encore davantage le confort de l'utilisateur.

Les différents moyens de fixation et de maintien des pompes et/ou les pattes de fixation du réservoir au véhicule peuvent être avantageusement réalisés d'une pièce avec l'enveloppe.

Les orifices de remplissage de chaque compartiment sont de préférence placés à une distance de la cloison interne de séparation telle qu'on puisse prévoir la solidarisation, notamment par soudage, de la cloison interne de séparation à l'une des parties de fond et couvercle sans endommager l'intégrité des orifices de remplissage. Les orifices comportent classiquement une protubérance faisant saillie hors du réservoir.

Un autre objet de l'invention est un véhicule automobile comportant un moteur fonctionnant avec un carburant issu de végétaux, comprenant un réservoir selon l'invention, l'un des compartiments étant relié au moteur pour l'alimenter en essence, l'autre compartiment étant relié à un système de lave-glaces.

Ainsi, grâce au réservoir selon l'invention, il est prévu de combiner
deux compartiments étanches, séparés par une cloison de séparation, chaque compartiment étant rempli d'un fluide assurant une fonctionnalité différente. L'un des compartiments comporte de l'essence classique destinée à mettre en marche le moteur prévu pour fonctionner avec un carburant issu de végétaux, tel que l'éthanol, en particulier en mélange avec de l'essence classique. L'autre compartiment est un compartiment lave-glaces comportant un fluide approprié aux lavages des vitres de pare-brise et/ou des parois vitrées de projecteurs de phares.

Le réservoir est très avantageusement placé dans la zone délimitée par le compartiment moteur, par exemple, dans la boîte à eau, et est configuré pour occuper le moins d'espace possible, en particulier l'espace occupé par le réservoir est inférieur à l'espace occupé par les deux réservoirs individuels d'essence et de lave-glaces. Ceci permet des conserver des espaces vides internes dans le compartiment moteur pour des raisons de sécurité en cas de choc.

La cloison interne de séparation des deux compartiments évite le mélange des deux fluides, lesquels sont dans la majorité des cas non-miscibles. Leur éventuel mélange aurait pour conséquence un risque sérieux d'endommagement des systèmes de lavage et/ou d'alimentation du moteur.

De préférence, le volume du compartiment essence est inférieur à celui du lave-glaces.

L'invention est maintenant décrite plus en détails en référence aux dessins annexés, non limitatifs, dans lesquels :
- la figure 1 représente une vue en perspective d'un réservoir selon une forme de réalisation de l'invention,
- La figure 2 est vue de dessus de la partie de fond du réservoir représenté sur la figure 1.

Par sensiblement rectangulaire ou parallélépipédique, vertical ou horizontal, on entend une direction/un plan formant un angle d'au plus ±30° avec une direction/un plan perpendiculaire ou parallèle à une autre direction/un autre plan.

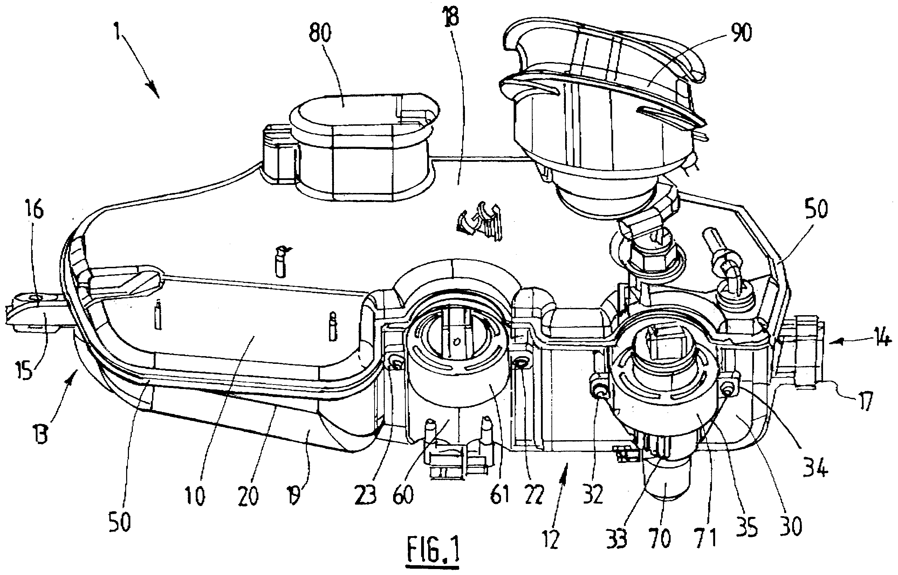

La figure 1 montre une vue en perspective d'un réservoir 1 comprenant une enveloppe extérieure 10 délimitant un volume intérieur, l'enveloppe 10 est réalisée en deux parties, une partie de couvercle 18 et une partie de fond 19, solidarisées de manière étanche par soudage le long d'un bord d'étanchéité 50 qui s'étend sur toute la périphérie de l'enveloppe 10.

L'enveloppe 10 est réalisée en PEHD.

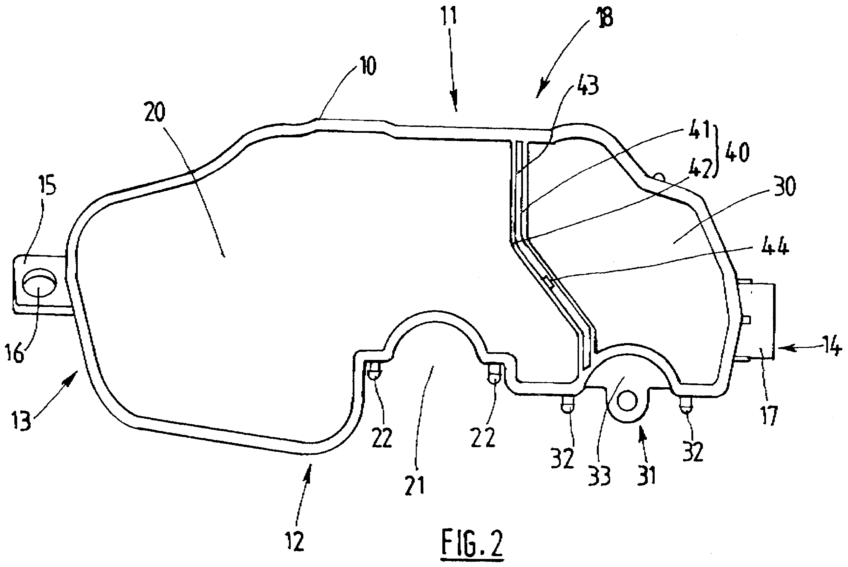

Tel que référencé sur la figure 2, l'enveloppe 10 présente deux faces longitudinales 11, 12 sensiblement parallèles entre-elles. Ici, chaque face longitudinale 11, 12 présente une forme externe non plane adaptée pour permettre au réservoir 1 d'être logé dans le compartiment moteur en s'adaptant au milieu environnant. Deux faces latérales 13, 14 sont sensiblement parallèles entre-elles et reliées aux faces longitudinales 11, 12. Elles présentent également une forme externe non plane.

Le réservoir 10 comporte deux compartiments respectifs 20, 30, un des compartiments 20 est prévu pour recevoir un fluide pour le lavage du pare-brise et l'autre compartiment 30 est prévu pour recevoir de l'essence.

Les compartiments 20, 30 sont respectivement munis d'orifices 80, 90 de remplissage pour le liquide de lavage du pare-brise et pour l'essence, ces orifices sont situés sur la partie de couvercle 18 et réalisés d'une pièce avec cette dernière.

Comme représenté sur la figure 1, le compartiment 20 contenant un fluide pour le lavage de pare-brise, présente une forme évasée, c'est-à-dire que, selon une direction s'étendant vers la face latérale 13, la partie de fond 19 n'est pas parallèle avec la partie couvercle 18, de sorte que selon cette direction le volume du compartiment 20 diminue. Ces compartiments 20, 30 sont séparés par une cloison interne de séparation 40, ici en forme de zig-zag, réalisée d'une pièce avec l'enveloppe 10, laquelle cloison interne de séparation 40 s'étend depuis la partie de fond 19 et la partie couvercle 18 (non représentée sur la figure 2). Dans l'exemple représenté, en référence à la figure 2, la cloison interne de séparation 40 est en deux parties, l'une solidaire de la partie de fond 19 et l'autre solidaire de la partie de couvercle 18 (non représentée). Ces deux parties sont conformées pour être en contact étanche lorsque les parties de fond 19 et de couvercle 18 sont solidarisées de manière étanche.

Tel que visible sur la figure 2, la cloison interne 40 de séparation de l'enveloppe est formée de deux parois sensiblement parallèles 41, 42, chaque paroi 41, 42 de la cloison interne 40 de séparation est une paroi délimitant le volume intérieur respectif de chaque compartiment 20, 30. Les deux parois 41, 42 sont séparées l'une de l'autre d'une distance de 5 mm (la représentation n'est pas à l'échelle), définissant un espace vide inter-paroi 43.

L'espace inter-paroi 43 de l'enveloppe 10 comprend un orifice 44 traversant débouchant dans l'espace inter-paroi 43. Sur la figure 2, cet orifice 44 est sur la partie inférieure de la cloison interne 40 et est donc percé sur la partie inférieure de l'enveloppe 10. Il peut toutefois être sur la partie supérieure de la cloison interne 40 et percé sur la partie supérieure de l'enveloppe 10 (non représenté).

Tel que visible sur la figure 2, une des faces longitudinales 12 comporte sur sa longueur du côté externe de l'enveloppe 10 à hauteur du compartiment 20, un logement 21 de forme hémicylindrique. De part et d'autre de l'évidement 21, des moyens de fixation et de maintien 22 d'une pompe pour un fluide de lavage de pare-brise (non représentée) sont solidarisés sur l'enveloppe 10.

Une des faces longitudinales 12 comporte sur sa longueur du côté externe de l'enveloppe 10 à hauteur du compartiment 30, un logement 31 de forme hémicylindrique. De part et d'autre du logement 31, des moyens de fixation et de maintien 32 d'une pompe pour essence (non représentée) sont solidarisés sur l'enveloppe 10. Un moyen de support 33 de la pompe pour essence est fixé à l'enveloppe 10 sur la partie inférieure de la face longitudinale 12 à l'enveloppe 10.

Dans l'exemple représenté, les moyens de fixation et de maintien 22 et 32 sont des doigts saillant de l'enveloppe 10 et dont l'extrémité libre est élargie.

Chaque paroi latérale 13, 14 est munie, du côté externe de l'enveloppe 10, de pattes de fixation 15, 17 respectivement, pour la fixation du réservoir 1 aux éléments de carrosserie du véhicule ou aux parties du compartiment moteur (non représentés sur les figures). La patte de fixation 15 définit un orifice traversant 16 destiné à contenir un moyen de solidarisation du réservoir 1 aux parties du compartiment moteur, tel qu'une vis, rivet ou analogue.

Tel que représenté sur la figure 1, une pompe d'évacuation 60 du fluide pour le lavage de pare-brise est fixée à l'intérieur de logement 21 (non représenté sur la figure 1) de la face latérale 12 dans la zone du compartiment 20, et la pompe 60 est maintenue par les moyens de fixations 22 venant coopérer des orifices traversants définis dans des pattes 23 solidaires de la pompe 60 et faisant saillie de celle-ci. La partie supérieure de la pompe 60 est munie d'un joint anti-bruit 61. Les tuyaux d'évacuation du fluide vers le pare-brise n'ont pas été représentés.

Une pompe d'évacuation d'essence 70 est fixée contre le logement 31 (non représenté sur la figure 2) de la face latérale 12 dans la zone du compartiment 30, et la pompe 70 est maintenue par les moyens de fixation 32 venant coopérer avec des orifices traversants définis dans des pattes 34 solidaires de la pompe 70 et faisant saillie de celle-ci. La partie supérieure de la pompe 70 est munie d'un joint anti-bruit 71. La pompe 70 est soutenue par un moyen de support 33, ici une plaque 33 solidaire de l'enveloppe 10. La pompe 70 est entourée par des fils métalliques souples 35 dont chaque extrémité est fixée sur les moyens de fixation 32. Les tuyaux d'évacuation de l'essence vers le moteur n'ont pas été représentés.

## Revendications

1. Véhicule automobile comportant un moteur fonctionnant avec un carburant issu de végétaux, comprenant un réservoir (1) de voiture automobile comprenant une enveloppe (10) extérieure délimitant un volume intérieur, l'enveloppe (10) comprenant deux parties( 18, 19), une partie de fond (19) et une partie de couvercle (18), solidarisées entre elles de manière étanche, ladite enveloppe (10) comportant une cloison interne (40), réalisée d'une pièce avec l'enveloppe (10), ladite cloison (40) séparant le volume intérieur en deux compartiments étanches (20, 30), laquelle cloison interne (40) de séparation s'étend depuis la partie de fond (19) et la partie couvercle (18) et dans lequel l'un des compartiments (30) du réservoir (1) est relié au moteur pour l'alimenter en essence, **caractérise en ce que** l'autre compartiment (20) est relié à un système de lave-glaces.

2. Véhicule automobile selon la revendication 1, dans lequel la cloison interne (40) de séparation de l'enveloppe (10) est formée d'au moins deux parois sensiblement parallèles (41, 42).

3. Véhicule automobile selon la revendication 2, dans lequel chaque paroi (41, 42) de la cloison interne (40) de séparation est une paroi (41, 42) délimitant de manière étanche le volume intérieur respectif de chaque compartiment (20, 30).

4. Véhicule automobile selon la revendication 2 ou 3, dans lequel les deux parois (41, 42) sont séparées l'une de l'autre d'une distance prédéterminée, définissant un espace inter-paroi (43), l'enveloppe (10) comprenant au moins un orifice (44) traversant débouchant dans l'espace inter-paroi (43).

5. Véhicule automobile selon la revendication 4, dans lequel l'orifice (44) est une fente s'étendant sur au moins une partie de l'enveloppe (10) et débouchant dans l'espace inter-paroi (43).

6. Véhicule automobile selon l'une quelconque des revendications 1 à 5, lequel est réalisé en un matériau polymère compatible avec chaque fluide destiné à être contenu dans chaque compartiment (20, 30) respectif.

7. Véhicule automobile selon l'une quelconque des revendications 1 à 6, dans lequel, sur une des faces longitudinales (11, 12), chaque compartiment (20, 30) définit sur une de ses longueurs, délimitée par une extrémité de la cloison interne (40) de séparation, des creux ou dépressions (21, 31) formant des logements de pompes pour fluides (60, 70).

8. Véhicule automobile selon l'une quelconque des revendications 1 à 7, dans lequel l'enveloppe (10) comprend en outre des moyens de fixation et de maintien (22, 32) des pompes pour fluides (60, 70) et destinés à coopérer avec des moyens de fixation et de maintien complémentaires (23, 34) pourvus sur chaque pompe pour fluide (60, 70).

## Patentansprüche

1. Kraftfahrzeug, aufweisend einen Motor, welcher mit einem aus Pflanzen hergestellten Kraftstoff arbeitet, welches einen Tank (1) für Personenwagen aufweist, welcher eine ein inneres Volumen begrenzende äußere Hülle (10) aufweist, wobei die Hülle (10) zwei Teile (18, 19) aufweist, einen Bodenteil (19) und einen Deckelteil (18), welche auf abdichtende Weise fest miteinander verbunden sind, wobei die Hülle (10) eine innere Trennwand (40) aufweist, welche aus einem Stück mit der Hülle (10) ausgeführt ist, wobei die Trennwand (40) das innere Volumen in zwei dichte Räume (20, 30) abtrennt, welche innere Trennwand (40) zur Abtrennung sich von dem Bodenteil (19) und dem Deckelteil (18) aus erstreckt, und bei welchem der eine der Räume (30) des Tanks (1) mit dem Motor verbunden ist, um ihn mit Benzin zu versorgen, **dadurch gekennzeichnet, dass** der andere Raum (20) mit einem Scheibenwaschsystem verbunden ist.

2. Kraftfahrzeug nach Anspruch 1, bei welchem die innere Trennwand (40) zur Abtrennung der Hülle (10) aus mindestens zwei im wesentlichen parallelen Wänden (41, 42) gebildet wird.

3. Kraftfahrzeug nach Anspruch 2, bei welchem jede Wand (41, 42) der inneren Trennwand (40) zur Abtrennung eine Wand (41, 42) ist, welche das jeweilige innere Volumen jedes Raums (20, 30) auf abdichtende Weise abgrenzt.

4. Kraftfahrzeug nach Anspruch 2 oder 3, bei welchem die beiden Wände (41, 42) durch einen vorgegebenen Abstand, welcher einen Spalt (43) zwischen den Wänden definiert, voneinander getrennt sind, wobei die Hülle (10) mindestens eine Durchgangsöffnung (44) aufweist, welche in den Spalt (43) zwischen den Wänden mündet.

5. Kraftfahrzeug nach Anspruch 4, bei welchem die Öffnung (44) ein Schlitz ist, welcher sich zumindest über einen Teil der Hülle (10) erstreckt und in den Spalt (43) zwischen den Wänden mündet.

6. Kraftfahrzeug nach einem der Ansprüche 1 bis 5, welches aus einem Polymermaterial ausgeführt ist, welches mit jedem Fluid kompatibel ist, das dafür vorgesehen ist, in jedem Raum (20, 30) jeweils enthalten zu sein.

7. Kraftfahrzeug nach einem der Ansprüche 1 bis 6, bei welchem an einer der longitudinalen Flächen (11, 12) jeder Raum (20, 30) an einer seiner Längen, welche durch ein Ende der inneren Trennwand (40) zur Abtrennung abgegrenzt wird, Aushöhlungen oder Vertiefungen (21, 31) definiert, welche Aufnahmen für Pumpen für Flüssigkeiten (60, 70) bilden.

8. Kraftfahrzeug nach einem der Ansprüche 1 bis 7, bei welchem die Hülle (10) außerdem Mittel zur Befestigung und zum Festhalten (22, 32) der Pumpen für Flüssigkeiten (60, 70) aufweist, welche dafür vorgesehen sind, mit komplementären Mitteln zur Befestigung und zum Festhalten (23, 34) zusammenzuwirken, welche an jeder Pumpe für Flüssigkeiten (60, 70) vorgesehen sind.

## Claims

1. Motor vehicle comprising an engine operating with a fuel obtained from plants, comprising a motor car tank (1) comprising an outer casing (10) delimiting an inner volume, the casing (10) comprising two portions (18, 19), a bottom portion (19) and a cover portion (18), secured to one another in a sealed manner, said casing (10) comprising an inner partition (40) made in one piece with the casing (10), said partition (40) separating the inner volume into two sealed compartments (20, 30), which inner separating partition (40) extends from the bottom portion (19) and the cover portion (18), and wherein one of the compartments (30) of the tank (1) is connected to the engine to supply it with gasoline, **characterized in that** the other compartment (20) is connected to a washer system.

2. Motor vehicle according to Claim 1, in which the inner separating partition (40) of the casing (10) is formed by at least two substantially parallel walls (41, 42).

3. Motor vehicle according to Claim 2, in which each wall (41, 42) of the inner separating partition (40) is a wall (41, 42) delimiting in a sealed manner the respective inner volume of each compartment (20, 30).

4. Motor vehicle according to Claim 2 or 3, in which the two walls (41, 42) are separated from one another by a predetermined distance, defining an inter-wall space (43), the casing (10) comprising at least one through-orifice (44) opening into the inter-wall space (43).

5. Motor vehicle according to Claim 4, in which the orifice (44) is a slot extending over at least part of the casing (10) and opening into the inter-wall space (43).

6. Motor vehicle according to any one of Claims 1 to 5, which is made of a polymer material compatible with each fluid intended to be contained in each respective compartment (20, 30).

7. Motor vehicle according to any one of Claims 1 to 6, in which, on one of the longitudinal faces (11, 12), each compartment (20, 30) defines over one of its lengths, which is delimited by an end of the inner separating partition (40), hollows or depressions (21, 31) forming housings for fluid pumps (60, 70).

8. Motor vehicle according to any one of Claims 1 to 7, in which the casing (10) additionally comprises means (22, 32) for fastening and retaining the fluid pumps (60, 70) and intended to cooperate with complementary fastening and retaining means (23, 34) provided on each fluid pump (60, 70).
